# EUROPÄISCHE PATENTSCHRIFT

(11) **EP 3 901 861 B1**
(45) Veröffentlichungstag und Bekanntmachung des Hinweises auf die Patenterteilung: **25.02.2026**
(21) Anmeldenummer: 21169679.4
(22) Anmeldetag: 21.04.2021
(51) Int. Cl.: G06Q 10/04, G06Q 10/08

(54) **VERFAHREN, PROZESSORSCHALTUNG UND SYSTEM ZUM STEUERN EINES AUSBAUPROZESSES VON VERSORGUNGSSTATIONEN IN EINER VORBESTIMMTEN GEOGRAPHISCHEN REGION**
METHOD, PROCESSOR CIRCUIT AND SYSTEM FOR CONTROLLING AN EXPANSION PROCESS OF SUPPLY STATIONS IN A PREDETERMINED GEOGRAPHICAL REGION
PROCÉDÉ, CIRCUIT PROCESSEUR ET SYSTÈME DE COMMANDE D'UN PROCÉDÉ D'EXTENSION DES STATIONS D'ALIMENTATION DANS UNE ZONE GÉOGRAPHIQUE DÉTERMINÉE

(30) Priorität: 21.04.2020 DE 102020205041
(43) Veröffentlichungstag der Anmeldung: 27.10.2021
(73) Patentinhaber: VOLKSWAGEN AG, 38440 Wolfsburg (DE)
(72) Erfinder: Bippes, Michael, 38112 Braunschweig (DE); Weichelt, Nils Hendrik Robin, 10555 Berlin (DE)

(56) Entgegenhaltungen:
- DE-A1- 102018 210 766
- ANONYMOUS: "Geographic information system - Wikipedia", WIKIPEDIA, 9 March 2017 (2017-03-09), XP055435418, Retrieved from the Internet <URL:https://en.wikipedia.org/w/index.php?title=Geographic_information_system&oldid=769487836> [retrieved on 20171214]

## Beschreibung

Die Erfindung betrifft ein Verfahren zum Steuern eines Ausbauprozesses, mittels welchem Versorgungsstationen in bereits vorhandenen Basiseinrichtungen einer vorbestimmten geografischen Region installiert werden sollen. Insgesamt soll durch den Ausbauprozess erreicht werden, dass in der Region eine vorgegebene Ausbaustufe oder Versorgungsstufe erreicht ist. Ausgegangen wird hierbei von Basiseinrichtungen, die zu einer Versorgungsstation ausgebaut werden können oder die bereits als Versorgungsstation ausgebaut sind. Zum Durchführen des Verfahrens stellt die Erfindung eine Prozessorschaltung sowie ein System und eine Versorgungsinfrastruktur und ein Versorgungsverfahren bereit.

Wenn in einer geografischen Region, beispielsweise einer Stadt oder einem Bundesland oder in einem gesamten Land, Versorgungsstationen eines bestimmten Typs, beispielsweise Zapfanlagen für Wasserstoff oder Ausgabestellen für ein bestimmtes Produkt oder eine bestimmte Dienstleistung, installiert werden sollen, so ist man daran interessiert, einen solchen Ausbauprozess von Versorgungsstationen in der geografischen Region derart effizient zu steuern, dass in der gesamten Region die sich ergebende Ausbaustufe, das heißt der Grad der Versorgung, bedarfsgerecht verteilt ist, sodass die erreichte Ausbaustufe in der Region gleichmäßig sichergestellt ist.

In der Regel kann man beim Ausbauen von Versorgungsstationen in einer Region auf bereits vorhandene Basiseinrichtungen zurückgreifen, die sich mit geringem technischen Aufwand zu einer Versorgungsstation ausbauen lassen. Beispielsweise kann für Versorgungsstationen zum Bereitstellen von Wasserstoff auf Tankstellen als Basiseinrichtungen zurückgegriffen werden, die bereits Zapfsäulen für Benzin und Diesel aufweisen. Man kann also davon ausgehen, dass in der geografischen Region bereits Basiseinrichtungen vorhanden sind, die dahingehend ausgebaut werden können, dass sie auch als Versorgungsstation betrieben werden können. Im Zusammenhang mit der Erfindung ist unter einer Basiseinrichtung auch eine bereits vorhandene Versorgungsstation zu verstehen, in deren Umfeld dann natürlich der Bedarfs an einer Versorgungsstation schon gedeckt ist. Mit anderen Worten wird davon ausgegangen, dass sich in der geografischen Region Basiseinrichtungen befinden, von denen einige als jeweilige Basis für den Ausbau zu einer neuen Versorgungsstation verwendet werden sollen und/oder von denen zumindest eine bereits als Versorgungsstation ausgebaut ist. Hiervon ausgehend soll in der geografischen Region der Ausbauprozess von Versorgungsstationen derart vorangetrieben werden, dass in der Region ein vorbestimmter Versorgungsgrad oder eine vorbestimmte Ausbaustufe erreicht oder erfüllt ist.

Das beschriebene Ermitteln von Basiseinrichtungen ist ein wichtiger Bestandteil in der Einführung von neuen Antriebsformen für Kraftfahrzeuge, wenn diese Antriebsformen auf der Verwendung von Energieträgern fußen, die nicht Benzin und/oder Diesel sind. Hierunter fallen Wasserstoff, verdichtetes Erdgas (CNG), verflüssigtes Erdgas (LNG), Autogas (LPG). Hier ist jeweils eine entsprechende Versorgungsstation zum Versorgen von Kraftfahrzeugen mit solchen Energieträgern notwendig. Eine Versorgungsstation kann aber auch für einen Betriebsstoff benötigt werden, wie beispielsweise wässrige Harnstofflösung (sogenanntes AdBlue) oder Wasser. Als Basiseinrichtungen kann hier auf bereits betriebene oder vorhandene Tankstellen zurückgegriffen werden, die sich zum Ausbau zu einer entsprechenden Versorgungsstation eignen.

Zurzeit erfolgt die Planung solcher Infrastrukturen aus Versorgungsstationen entweder auf Erfahrungswerten oder fußt auf Methoden, die zum Beispiel Verkehrs- und Einwohnerdichten sowie vorhergesagte Fahrzeugneuverkäufe einbeziehen. Eine solche Planung ist allerdings sehr aufwendig, denn sie erfordert die entsprechende Datenakquise und Auswertung.

Eine schnelle Lösung zum Steuern eines Ausbauprozesses von Versorgungsstationen zum Erreichen einer benötigten Ausbaustufe ist heute aufgrund mangelnder Erfahrung und/oder mangelnder Datenlage jedoch in vielen Fällen nicht verfügbar, sodass der hohe Aufwand an Zeit und/oder Rechenleistung und/oder Personal und/oder Datenerzeugung notwendig ist.

Die Planung von Tankstelleninfrastruktur konzentriert sich insbesondre auf den Ausbau für gasförmige Kraftstoffe. Xu et al. (Xu, X./Xu, B./Dong, J./Liu, X. (2017): Near-term analysis of a roll-out strategy to introduce fuel cell vehicles and hydrogen stations in Shenzhen China, Applied Energy, 196, S. 229-237) bestimmen mögliche Standorte für Wasserstofftankstellen anhand der Verteilung von Bevölkerung, Industrie und Einkommen. Dabei werden die Regionen nach Stadteilen der südchinesischen Stadt Shenzhen unterteilt und der Bedarf in den Stadtteilen prognostiziert. Darauf aufbauend werden Tankstellengrößen für die unterschiedlichen Bezirke empfohlen. Xu geht hier auch explizit auf die Berechnung des Angebotspreises ein.

Brey et al. (Brey, J. J./Brey, R./Carazo, A. F./Ruiz-Montero, M. J./Tejada, M. (2016): Incorporating refuelling behaviour and drivers' preferences in the design of alternative fuels infrastructure in a city, Transportation Research Part C: Emerging Technologies, 65, S. 144-155) entwickelt eine Methodik zum Ausbau bereits vorhandener Tankstellen für neue Kraftstoffe. Hierzu werden vorhandene Tankstellen als Ausbaukandidaten betrachtet und anhand der Bevölkerung und des Verkehrsaufkommens im Umkreis der Tankstellen bewertet. Dabei gehen die Faktoren mit unterschiedlicher Gewichtung in die Bewertung ein. Weiter entfernte Bevölkerungs- und Verkehrsanteile werden niedriger bewertet als nähere.

Aus der DE 10 2018 210 766 A1 ist bekannt, eine Treibstoffbedarfslandkarte unter Nutzung einer Fahrzeugrestreichweite zu generieren, was die Verfolgung von Fahrtrouten von Kraftfahrzeugen erfordert. Um dann in einer Straßenkarte geeignete Standorte für Tankstationen zu ermitteln, wird die Karte in Kacheln eingeteilt.

Aus der Internetseite "Wikipedia, Geographic Information System" ist ein Computersystem zur Erfassung, Speicherung, Bearbeitung, Verwaltung und Darstellung von räumlichen oder geografischen Daten bekannt.

Der Erfindung liegt die Aufgabe zugrunde, in einer geografischen Region den Ausbauprozess von Versorgungsstationen effizient und ressourcenschonend durchzuführen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Die Erfindung geht davon aus, dass die Nutzung einer Versorgungsstation es erfordert, dass ein Nutzer an der Versorgungsstation anwesend ist, beispielsweise mit seinem Kraftfahrzeug, um dieses zu betanken.

Für die Erfindung ist ein Verfahren bereitgestellt, um einen Ausbauprozess von Versorgungsstationen in einer vorbestimmten geografischen Region zu steuern. Durch den Ausbauprozess sollen Versorgungsstationen, beispielsweise Zapfanlagen für einen vorbestimmten Energieträger, in der Region installiert oder ausgebaut werden, also eine Versorgungsinfrastruktur, um in der Region einen vorbestimmten Versorgungsgrad oder eine vorbestimmte Ausbaustufe zu erreichen, die im Weiteren durch ein Abbruchkriterium für den Ausbauprozess definiert werden wird. Das Verfahren geht davon aus, dass sich in der Region Basiseinrichtungen befinden, von denen einige als jeweilige Basis für den Ausbau zu einer solchen neuen Versorgungsstation verwendet werden können oder sollen und/oder von denen zumindest eine bereits als Versorgungsstation ausgebaut ist. Falls eine Basiseinrichtung bereits als Versorgungsstation ausgebaut ist, also hier schon eine Versorgungsstation vorliegt, muss natürlich in deren Umfeld keine weitere Versorgungsstation installiert oder ausgebaut werden.

Das Verfahren wird durch eine Prozessorschaltung durchgeführt, die in einem ersten Schritt in einer digitalen Landkarte der Region mittels eines vorbestimmten Rasters die Region in Rasterzellen einteilt. Das Raster weist hierbei eine initiale Rasterweite auf, das heißt die Abmessungen der einzelnen Rasterzellen weisen initiale Abmaße auf. Beispielsweise kann als Raster ein Rechteckraster verwendet werden, das heißt die einzelne Rasterzellen sind aneinander angrenzende Rechtecke. Die Rasterweite kann dann durch die Kantenlängen der Rasterzellen definiert sein, die beispielsweise in einem Bereich von 100 Meter bis 10 Kilometer liege können.

Das Steuern des Ausbauprozesses erfordert es, dass festgelegt wird, wo eine jeweilige Versorgungsstation installiert oder bereitgestellt werden soll, um in der Region die angestrebte oder vorgegebene Ausbaustufe effizient zu erreichen, das heißt ohne Verschwendung einer Ressource aufgrund eines Ausbaus einer Versorgungsstation an einem Ort, wo sie nicht benötigt wird oder nur weniger dringend benötigt wird als an einem anderen Ort.

Um die Versorgungsstation effizient zu platzieren, wird durch die Prozessorschaltung iterativ ermittelt, an welchen Stellen oder Orten die Versorgungsstationen bereitzustellen sind. Durch die Prozessoreinrichtung oder Prozessorschaltung wird hierzu in einem jeweiligen Iterationsdurchlauf für jede Rasterzelle ermittelt, welche der Basiseinrichtungen sich in dieser Rasterzelle befinden. Es wird also pro Rasterzelle überprüft, ob sich dort eine Basiseinrichtung befindet, die sich zu einer Versorgungsstation ausbauen lässt, und/oder ob sich dort eine Basiseinrichtung befindet, die bereits als Versorgungsstation ausgebaut ist. Bei Vorhandensein zumindest einer Basiseinrichtung in der Rasterzelle wird mittels eines vorbestimmten Auswahlkriteriums zumindest eine vorhandene Basiseinrichtung ausgewählt. Jede übrige Basiseinrichtung der Rasterzelle wird für den weiteren Verlauf des Verfahrens ignoriert. Somit verbleibt in der Rasterzelle zumindest eine ausgewählte Basiseinrichtung.

Sind auf diese Weise in den Rasterzellen ausgewählte verbleibende Basiseinrichtungen identifiziert worden, so überprüft die Prozessorschaltung ein Abbruchkriterium. Falls durch die Rasterweite des aktuellen Rasters und/oder durch die ausgewählten verbleibenden Basiseinrichtungen das Abbruchkriterium noch nicht erfüllt ist, also unerfüllt geblieben ist, so wird die Region erneut mittels eines weiteren Rasters mit einer vergrößerten Rasterweite, die also größer als die zuvor verwendete Rasterweite ist, in vergrößerte Rasterzellen eingeteilt. Für die vergrößerten Rasterzellen des neuen Rasters wird dann der beschriebenen Iterationsdurchlauf (Ermitteln der pro Rasterzelle noch verbleibenden Basiseinrichtungen und dann erneutes Auswählen verbleibender Basiseinrichtungen mittels des Auswahlkriteriums) wiederholt durchgeführt.

Andernfalls, falls also das Abbruchkriterium mit dem aktuellen Raster und/oder den ausgewählten verbleibenden Basiseinrichtungen erfüllt ist, wird für die in den Rasterzellen ausgewählten verbleibenden Basiseinrichtungen signalisiert, dass diese als Basen für jeweils eine Versorgungsstation zu verwenden sind. Dies kann bedeuten, dass eine solche ausgewählte verbleibende Basiseinrichtung bereits als Versorgungsstation ausgebaut ist und als solche identifiziert wurde oder dass eine solche ausgewählte verbleibende Basiseinrichtung als Basis für den tatsächlichen Ausbau zu einer neuen Versorgungsstation verwendet werden soll.

Durch die Erfindung ergibt sich der Vorteil, dass in der geografischen Region gezielt ein Raster mit einer Rasterweite, die der gewünschten Ausbaustufe oder dem gewünschten Versorgungsgrad entspricht, pro Rasterzelle detektiert werden kann, ob dort eine Versorgungsstation benötigt wird. Der Bedarf wird hierbei daran identifiziert, ob sich in der jeweiligen Rasterzelle überhaupt schon eine Basiseinrichtung befindet. Ist dies nicht der Fall, dann kann dies als Signal oder Indiz dafür gewertet werden, dass auch keine Versorgungsstation benötigt wird. Befindet sich dagegen in einer Rasterzelle bereits eine Basiseinrichtung, die sich zu einer Versorgungsstation ausbauen lässt oder die sogar schon als Versorgungsstation ausgebaut ist, so wird dies als Signal oder Indiz dafür genutzt, dass hier ein Bedarf für eine Versorgungsstation in der jeweiligen Rasterzelle vorhanden ist. Dennoch erfolgt der Ausbau nicht für jede dieser Rasterzellen, sondern es wird nur so weit ausgebaut, dass sich die vorgegebene Ausbaustufe oder der vorgegebene Versorgungsgrad ergibt, also eine vorgegebene Flächenverteilung oder Dichte an Versorgungsstationen.

Dabei kann allein auf Grundlage der Geopositionsdaten von Basiseinrichtungen entschieden und gesteuert werden, wo Versorgungsstationen in der geografischen Region bereitgestellt werden müssen, um einen vorgegebenen Versorgungsgrad oder eine vorgegebene Ausbaustufe einzustellen. Als Maß für den Bedarf wird hierbei die geografische Verteilung und/oder geografische Dichte von Basiseinrichtungen verwendet. Möchte man beispielsweise Versorgungsstationen für einen bestimmten Energieträger oder Betriebsstoff für Kraftfahrzeuge bereitstellen, so kann das Verfahren darauf beruhen, dass man als Basiseinrichtungen Tankstellen für Benzin und/oder Diesel betrachtet oder analysiert, um hierdurch den Bedarf an Versorgungsstationen für den neuen Energieträger und/oder Betriebsstoff zu identifizieren.

Das Verfahren umfasst auch Ausführungsformen, durch die sich zusätzliche Vorteile ergeben.

Durch das Abbruchkriterium kann der Fachmann diejenigen Bedingungen vorgeben, die festlegen, wann der Ausbauprozess an Versorgungsstationen zu einem ausreichend großen Versorgungsgrad oder einer ausreichend hohen Ausbaustufe geführt hat. In einer Ausführungsform ist vorgesehen, dass das Abbruchkriterium umfasst, dass die Rasterweite des aktuellen Rasters einer vorbestimmten Zielrasterweite entspricht, welche eine durch den Ausbauprozess zu erreichende vorgegebene Ausbaustufe oder einen entsprechenden Versorgungsgrad beschreibt. Mit anderen Worten ist sichergestellt, dass zumindest in Rasterzellen mit der beschriebenen entsprechend großen Rasterweite mindestens eine Versorgungsstation bereitgestellt ist (wenn dort auch bereits eine Basiseinrichtung vorhanden ist). Zusätzlich oder alternativ dazu umfasst das Abbruchkriterium, dass ein mittlerer oder ein maximaler Abstandswert eines jeweiligen Abstands zwischen den ausgewählten verbleibenden Basiseinrichtungen in einem vorbestimmten Werteintervall liegt. Dies gilt natürlich nur für solche Rasterzellen, in denen sich auch eine Basiseinrichtung befindet. Somit sind also all diejenigen Zellen, in denen eine Versorgungsstation benötigt wird, derart dicht mit Versorgungsstationen versehen, dass der mittlere Abstand oder der maximale Abstand in dem vorgegebenen Werteintervall liegt. Somit ist sichergestellt, dass von all denjenigen Rasterzellen aus, die mit einer Versorgungsstation auszustatten sind, die mittlere Weglängen und/oder die mittlere Anreisezeit beziehungsweise die maximale Weglänge/Anreisezeit in dem vorbestimmten Werteintervall liegt und damit begrenzt ist. So kann beispielsweise festgelegt sein, dass der mittlere Abstandswert und/oder der maximale Abstandswert in einem Bereich von 500 Metern bis zehn Kilometern liegt.

In einer Ausführungsform sieht das besagte Auswahlkriterium zum Auswählen der jeweiligen Basiseinrichtung in der Rasterzelle vor, dass zu allen in der jeweiligen Rasterzelle vorhandenen Basiseinrichtungen eine geometrische Optimierungsbedingung geprüft und diejenige Basiseinrichtung ausgewählt wird, welche die Optimierungsbedingung erfüllt. Es wird also eine solche Basiseinrichtung gewählt, die ein geometrisches Optimum innerhalb der Rasterzelle erfüllt, also dort eine gemäß der Optimierungsbedingung optimale Position aufweist. In einer Ausführungsform umfasst die geometrische Optimierungsbedingung, dass die einem geometrischen Schwerpunkt der vorhandenen Basiseinrichtungen nächstgelegene Basiseinrichtung ausgewählt wird. Es wird also diejenige Basiseinrichtung verwendet, die in Bezug auf den geometrischen Schwerpunkt mittig liegt oder zumindest am nächsten. Alternativ dazu kann vorgesehen sein, dass diejenige Basiseinrichtung ausgewählt wird, deren quadratischer Abstandswert zu allen übrigen Basiseinrichtungen der Rasterzelle am geringsten ist.

Zusätzlich oder alternativ zu einem Auswahlkriterium, das die beschriebene geometrische Optimierungsbedingung zugrundelegt, sieht eine Ausführungsform vor, dass in einer Basiszelle eine oder einige oder jede Basiseinrichtung ausgewählt wird, die bereits als Versorgungsstation ausgebaut ist. Mit anderen Worten wird für eine solche Rasterzelle gar nicht erst signalisiert, dass eine neue Versorgungsstation benötigt wird, sondern eine bereits vorhandene Versorgungsstation wird als ausgewählte verbleibende Basiseinrichtung in dem Verfahren weiter berücksichtigt oder genutzt. Damit erspart man sich für eine solche Rasterzelle die Installation einer neuen Versorgungsstation.

In einer Ausführungsform sieht das Auswahlkriterium zum Auswählen der jeweiligen Basiseinrichtung vor, dass zu allen in der jeweiligen Rasterzelle vorhandenen Basiseinrichtungen eine jeweilige Eigenschaftsbewertung zu einer vorbestimmten Versorgungseigenschaft ermittelt wird. Durch diese Eigenschaftsbewertung wird beschrieben oder ausgedrückt, wie günstig die Basiseinrichtung ausgestaltet ist in Bezug auf ihre Nutzung als Versorgungsstation. Hierzu wird zumindest eine Versorgungseigenschaft, welche die Eignung als Versorgungsstation beschreibt, zu den Basiseinrichtungen ermittelt. Es wird dann diejenige Basiseinrichtung mit der größten Gesamtbewertung ausgewählt. Mit anderen Worten werden bei der Eigenschaftsbewertung Werte oder eine Rangordnung anhand zumindest einer Versorgungseigenschaft für die unterschiedlichen Basiseinrichtungen einer Rasterzelle ermittelt. Dann wird diejenige Basiseinrichtung ausgewählt, die im Vergleich die größte Gesamtbewertung erhält.

So sieht eine Ausführungsform vor, dass zumindest eine der folgenden Versorgungseigenschaften bei dieser Auswahl berücksichtigt wird: eine verfügbare Infrastruktur (beispielsweise Anschlüsse für Wasser oder Gas; eine Stromversorgung), eine verfügbare Baufläche (auf welcher Komponenten für eine Versorgungsstation aufgebaut oder angeordnet werden könnten), eine vorhandene Verkehrsanbindung (beispielsweise Fahrspuranzahl einer an der Basiseinrichtung vorbeiführenden Straße). Somit kann vermieden werden, dass zusätzliche Baumaßnahmen notwendig werden.

In einer Ausführungsform wird berücksichtigt, dass eine Basiseinrichtung als Versorgungsstation für unterschiedlichen Verkehr genutzt werden kann, beispielsweise Autobahnverkehr, ländlichen Verkehr und Stadtverkehr. Wird eine Versorgungsstation an einer Autobahn bereitgestellt, so bedeutet dies nicht unbedingt, dass in derselben Rasterzelle auch der ländliche Verkehr einfachen Zugang zu einer solchen Versorgungsstation hätte, weil man dazu zunächst auf die Autobahn fahren müsste. Um hier Abhilfe zu schaffen, sieht eine Ausführungsform vor, dass eine Gesamtmenge oder ein Gesamtdatensatz an Basiseinrichtungen ermittelt wird (also alle in der Region verfügbaren Basiseinrichtungen) und jede der Basiseinrichtungen durch eine jeweilige Tagging-Angabe oder Kategorieangabe einer aus mehreren vorbestimmten Versorgungskategorien zugeordnet wird. So kann eine Basiseinrichtung beispielsweise durch eine Tagging-Angabe dahingehend kategorisiert werden, ob sie an einer Autobahn steht oder in einem Stadtgebiet oder in einem ländlichen Gebiet (außerhalb einer Stadt und nicht auf der Autobahn). Dies wäre dann eine Tagging-Angabe zur Versorgungskategorie "Betriebsort". Der Gesamtdatensatz der Basiseinrichtungen wird dann in Teildatensätze eingeteilt, wobei jede Teildatensatz der Basiseinrichtungen derselben Tagging-Angabe oder Kategorieangabe zugeordnet ist oder diese enthält. So können also beispielsweise alle Basiseinrichtungen an Autobahnen eine Teildatensatz bilden und alle Basiseinrichtungen in Stadtgebieten eine weitere Teildatensatz. Für jede Teildatensatz getrennt wird dann mittels der beschriebenen Iterationsdurchläufe ermittelt, wo Basen für Versorgungsstationen liegen sollen. Das bisher beschriebene Verfahren kann sich also jeweils auf all diejenigen Basiseinrichtungen beziehen, die einer gemeinsamen Tagging-Angabe zu einer Versorgungskategorie zugeordnet sind. Somit können also für unterschiedliche Teildatensätze die Ausbaustufen getrennt eingestellt oder festgelegt werden.

Eine Ausführungsform gibt hierzu vor, dass durch die Tagging-Angaben zumindest eine der folgenden Versorgungskategorien beschrieben ist: eine lokale Einwohnerdichte im Bereich der jeweiligen Basiseinrichtung, eine Postleitzahl der Basiseinrichtung, eine lokale Verkehrsdichte im Bereich der jeweiligen Basiseinrichtung, eine lokale Fahrzeugdichte im Bereich der jeweiligen Basiseinrichtung, der beschriebene Betriebsort. Diese Versorgungskategorien haben sich als aussagekräftiger Indikator zum Festlegen von unterschiedlichen Ausbaustufen bewährt. Eine Versorgungskategorie kann also beispielsweise den Betriebsort beschreiben (mit beispielhaften möglichen Tagging-Angaben: an der Autobahn; im Stadtgebiet; im ländlichen Gebiet, das heißt außerhalb der Stadt und nicht auf der Autobahn). So kann die Versorgungskategorie für lokale Einwohnerdichte beispielsweise unterschiedliche Werteintervalle vorsehen und die Tagging-Angabe legt dann fest, in welchem Werteintervall die aktuelle Basiseinrichtung zugeordnet ist.

In einer Ausführungsform sind den Basiseinrichtungen jeweils Geopositionsdaten einer jeweiligen Geoposition oder jeweiliger Geokoordinaten der Basiseinrichtung zugeordnet. Jede Basiseinrichtung kann also durch ihre Geopositionsdaten in Bezug auf ihren Standort beschrieben sein. Insgesamt ergibt sich somit ein Datensatz der Geopositionsdaten der zu berücksichtigenden Basiseinrichtungen. Die Geopositionsdaten werden in einer Ausführungsform mittels einer kartografischen Projektion (Koordinatentransformation) auf eine Ebene der beschriebenen Landkarte der Region transformiert. Ein Beispiel für eine solche kartografische Projektion ist die Mollweide-Projektion. Hierdurch ergibt sich der Vorteil, dass eine Verzerrung zwischen den Kugelkoordinaten der Geoposition gemäß einem Empfänger eines Positionssignals eines GNSS (Global Navigation Satellite System), wie beispielsweise dem GPS (Global Positioning System), an einer Basiseinrichtung ermittelt werden können und den kartesischen Koordinaten einer Landkarte nicht dazu führen, dass die Ausbaustufe aufgrund einer Verzerrung in einer Rasterzelle falsch eingestellt wird. Alternativ zum Projizieren der Geopositionsdaten sieht eine Ausführungsform vor, dass das jeweilige Raster in Kugelkoordinaten oder sphärischen Koordinaten definiert ist. Mit anderen Worten werden also nicht die Geopositionsdaten der Basiseinrichtungen in die Landkarte projiziert, sondern die Landkarte mit ihrem Raster wird in Kugelkoordinaten ausgedrückt und somit auf die Geoposition der Basiseinrichtung angepasst. Hierdurch kann die Verzerrung besonders gering gehalten werden. Die Geopositionsdaten einer jeweiligen Basiseinrichtung können mittels des besagten Empfängers eines Positionssignals eines GNSS gemessen oder erzeugt oder ermittelt werden und diese Geopositionsdaten können zu dem Datensatz zusammengefasst werden.

In einer Ausführungsform wird der besagte Ausbauprozess für Versorgungsstationen durchgeführt, die ein vorbestimmtes Betriebsmittel (beispielsweise einen Energieträger, wie beispielsweise Wasserstoff oder Gas der bereits beschriebenen Art) für Kraftfahrzeuge betrifft. Eine andere Form des Betriebsmittels anstelle eines Energieträgers kann beispielsweise die beschriebene Harnstofflösung sein. Bei dieser Ausführungsform ist vorgesehen, dass als Betriebseinrichtungen insbesondere Tankstellen zugrundegelegt werden. Mit anderen Worten wird das sogenannte Tankstellennetz oder die Tankstelleninfrastruktur als Grundlage dafür verwendet, eine Versorgungsinfrastruktur für das beschriebene Betriebsmittel zu implementieren. Die Erfindung kann aber zusätzlich oder alternativ dazu außerhalb des Bereichs Kraftfahrzeuge auch beispielsweise zum Bereitstellen von Versorgungsstationen in Apotheken oder Supermärkten vorgesehen sein, um nur Beispiele zu nennen. So kann beispielsweise vorgesehen sein, für eine Ausgabe eines flächendeckend benötigten Medikaments in Apotheken, welches entsprechende Versorgungsstationen (beispielsweise bestimmte Spende-Automaten) benötigt, dies mittels des Verfahrens in einer geografischen Region zu installieren.

Bisher wurde beschrieben, dass das Raster stufenweise oder iterativ vergrößert wird, bis die erreichte Rasterweite der durch die vorgegebene Ausbaustufe vorgegebenen Rasterung oder Größe entspricht. Die iterative Vergrößerung des Rasters kann rechenintensiv sein, insbesondere wenn beispielsweise Kugelkoordinaten oder sphärische Koordinaten verwendet werden. Um hier Rechenressourcen zu sparen, sieht eine Ausführungsform vor, dass das Raster mit der jeweils größeren Rasterweite durch Zusammenfassen von Rasterzellen einer zuvor verwendeten Rasterweite, also beispielsweise der unmittelbar davor verwendeten oder auch der vorletzten Rasterung, gebildet wird. Mit anderen Worten werden lediglich die Daten mehrerer Rasterzellen zusammengefasst, um die Daten einer aktuellen Rasterzelle zu erhalten. Diese Datenverwaltung ist besonders recheneffizient.

In einer Ausführungsform wird durch das Steuern des Ausbauprozesses die eigentliche Implementierung der Versorgungsstationen gesteuert, indem bei erfülltem Abbruchkriterium (wenn also die gewünschte Ausbaustufe erreicht werden kann) dann gemäß der Signalisierung, also gemäß der Angabe, welche ausgewählten verbleibenden Basiseinrichtungen genutzt werden sollen, um Versorgungsstationen bereitzustellen, an diesen ausgewählten verbleibenden Basiseinrichtungen jeweils ein Installationsvorgang zum Installieren jeweils einer Versorgungsstation ausgelöst wird. Dies gilt natürlich nur für diejenigen Basiseinrichtungen, an denen eine Versorgungsstation noch fehlt. Somit wird also der tatsächliche Ausbau in der Region in Bezug auf Versorgungsstationen gesteuert. Hierzu können beispielsweise entsprechende Baueinheiten angesteuert werden, die sie je nach Versorgungsstation natürlich unterscheiden. Eine Baueinheit kann ein Bauhof oder ein Bauunternehmen sein. Beispielsweise können dort Baumaschinen angesteuert werden.

Beispielsweise können an die zumindest eine Baueinheit die Koordinaten und/oder Adressen der ausgewählten verbleibenden Basiseinrichtungen signalisiert werden, damit deren Umbau oder deren Umrüstung in eine Versorgungsstation mittels der zumindest einen Baueinheit erfolgt, soweit die jeweilige Basiseinrichtung nicht schon als Versorgungsstation ausgerüstet ist. Beispielsweise können entsprechende Auftragsdaten für den Ausbau durch die Prozessorschaltung erzeugt werden. Mit anderen Worten wird das mittels des Verfahrens erzeugte Signal, das die ausgewählten verbleibenden Basisstationen beschreibt oder signalisiert, dazu genutzt, um den Ausbau dieser Basisstationen als Basen für die Versorgungsstationen auszulösen. Durch den Ausbau entsteht in der Region eine Versorgungsinfrastruktur aus Versorgungsstationen, welche die Region gemäß dem durch das Abbruchkriterium definierten Versorgungsgrad oder der Versorgungsstufe mit Gütern, insbesondere einem Betriebsmittel für Kraftfahrzeuge, versorgt. Mit anderen Worten nimmt die durch das Verfahren bewirkte Signalisierung Einfluss auf die Ausgestaltung der Versorgungsinfrastruktur, insbesondere auf die Standorte der Versorgungsstationen. Es erfolgt somit der Bau von Versorgungsstationen an solchen Standorten, die gemäß einer Ausführungsform des Verfahrens ermittelt wurden.

Um das Verfahren durchzuführen, sieht die Erfindung auch eine Prozessorschaltung vor. Eine solche Prozessorschaltung kann beispielsweise als ein Computer oder Computerverbund zum Ausführen eines Programms ausgestaltet sein. Die Prozessorschaltung ist dazu eingerichtet, einen Datensatz, welcher eine Gesamtmenge oder ein Gesamtdatensatz von in einer vorbestimmten geografischen Region befindlichen Basiseinrichtungen beschreibt, zu empfangen. Dieser Datensatz kann in der beschriebenen Weise beispielsweise Geopositionsdaten von Basiseinrichtungen beschreiben. Zusätzlich oder alternativ dazu können beispielsweise die beschriebenen Tagging-Angaben und/oder die beschriebenen Versorgungseigenschaften durch den Datensatz beschrieben sein. Auf der Grundlage dieses Datensatzes führt die Prozessorschaltung eine Ausführungsform des erfindungsgemäßen Verfahrens durch. Die Prozessorschaltung kann hierzu einen oder mehrere Mikroprozessoren aufweisen. Die Verfahrensschritte können durch einen Programmcode oder eine Software beschrieben sein, welche Programminstruktionen aufweist, die dazu eingerichtet sind, bei Ausführen durch die Prozessorschaltung die Ausführungsform des erfindungsgemäßen Verfahrens durchzuführen.

Für die Erfindung ist auch ein System zum Durchführen des Ausbauprozesses von Versorgungsstationen in der geografischen Region bereitgestellt. Das System weist eine Ausführungsform der beschriebenen Prozessorschaltung auf und zudem ist diese Prozessorschaltung in dem System mit zumindest einer Baueinheit zum Installieren einer Versorgungsstation gekoppelt. Eine solche Baueinheit kann beispielsweise ein Bauhof mit Baumaschinen sein. Die Kopplung kann eine Kommunikationsverbindung, z.B. eine Internetverbindung, umfassen.

Über die besagte Kopplung können beispielsweise die Koordinaten und/oder Adressen der ausgewählten verbleibenden Basiseinrichtungen signalisiert werden, damit deren Umbau oder deren Umrüstung in eine Versorgungsstation mittels der zumindest einen Baueinheit ausgelöst wird, soweit die jeweilige Basiseinrichtung nicht schon als Versorgungsstation ausgestattet ist. Beispielsweise können entsprechende Auftragsdaten durch die Prozessorschaltung erzeugt werden.

Die Erfindung stellt die resultierende Versorgungsinfrastruktur bereit, die dazu eingerichtet ist, eine vorbestimmte geographische Region entsprechend einem vorbestimmten Versorgungsgrad mit vorbestimmten Gütern zu versorgen, wobei die Versorgungsinfrastruktur hierzu Versorgungsstationen aufweist, deren Standorte in der Region durch eine Ausführungsform des beschriebenen Verfahrens und/oder durch die beschriebene Prozessorschaltung und/oder durch das beschriebene System festgelegt sind. Die Versorgungsinfrastruktur versorgt die Region insbesondere mit Gütern, die ein persönliches Erscheinen erfordern, z.B. indem ein Nutzer an einer Versorgungsstation mit einem Kraftfahrzeug erscheint, um dieses mit einem Betriebsmittel zu versorgen, z.B. mit einem Energieträger zu betanken. Die ermittelten Standorte oder ausgewählten Basisstationen werden dazu auf der Grundlage des Verfahrens in Versorgungsstationen für diese Güter, insbesondere für ein Betriebsmittel für Kraftfahrzeuge, umgewandelt (falls sie noch keine sind) und dann in der Region als Versorgungsstationen betrieben. Dies ergibt die Versorgungsinfrastruktur.

Durch das zugrunde liegende Auswahlkriterium wird eingestellt, welche Verkehrsströme oder welcher Verkehrsfluss, z.B. den Fahrzeugverkehr, sich in der Region durch die resultierende Versorgungsinfrastruktur ergibt, wenn deren Versorgungsstationen genutzt werden. Denn durch die beschriebenen Varianten des Auswahlkriteriums kann z.B. die summierte Streckenlänge und/oder Dauer aller Umwege, die Nutzer der Versorgungsstationen in der Region zum Erreichen der Versorgungsstationen zurücklegen, minimiert werden oder zumindest unter einen vorbestimmten Schwellenwert eingestellt werden. Durch das Auswahlkriterium kann dazu z.B. die vorhandene Verkehrsdichte und/oder eine andere der beschriebenen Versorgungskategorien und/oder eine der beschriebenen Optimierungsbedingungen berücksichtigt werden.

Indem durch das Verfahren für die ausgewählten verbleibenden Basiseinrichtungen signalisiert wird, dass diese als Basen für die Versorgungsstationen zu verwenden sind und dann die Basen in Versorgungstationen innerhalb der Region umgewandelt werden, ergibt sich der Aufbau einer Versorgungsinfrastruktur, die in der gesamten Region den Versorgungsgrad oder die Ausbaustufe in Bezug auf das Verteilen oder Versorgen der jeweils vorgesehenen Güter oder Betriebsmittel, beispielsweise eines Energieträgers oder Betriebsstoff für Kraftfahrzeuge (d.h. allgemein ein Betriebsmittel für Kraftfahrzeuge).

Durch den Betrieb der erfindungsgemäßen Versorgungsinfrastruktur ergibt sich ein Versorgungsverfahren, durch welches Güter, insbesondere ein Betriebsmittel für Kraftfahrzeuge, innerhalb der Region an Standorten ausgegeben oder bereitgestellt werden, die durch eine Ausführungsform des erfindungsgemäßen Verfahrens ermittelt sind. Somit wird die Region mit den Gütern, insbesondere dem Betriebsmittel für Kraftfahrzeuge, auf einem Versorgungsgrad oder einer Ausbaustufe versorgt, die für die gesamte Region sichergestellt ist.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung einer Ausführungsform des erfindungsgemäßen Systems;
- Fig. 2: ein Flussschaudiagramm zur Veranschaulichung einer Ausführungsform des erfindungsgemäßen Verfahrens, wie es durch das System von Fig. 1 durchgeführt werden kann; und
- Fig. 3: eine Skizze zur Veranschaulichung eines Iterationsdurchlaufs, wie er Bestandteil des Verfahrens von Fig. 2 sein kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

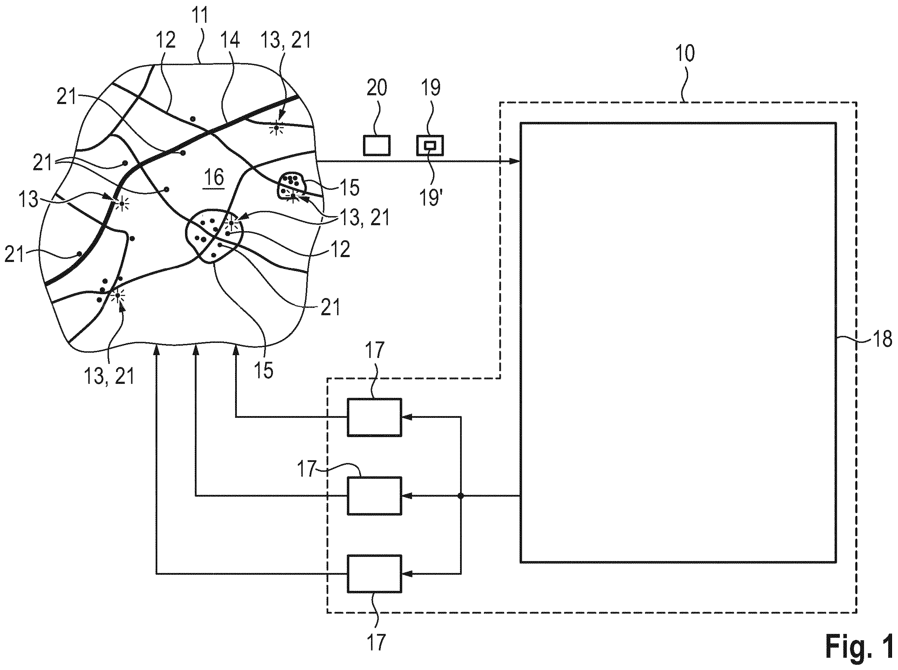

Fig. 1 zeigt ein System 10, das dazu eingerichtet ist, einen Ausbauprozess zu unterstützten oder zu steuern, mittels welchem für eine geografische Region 11 sichergestellt werden soll, dass eine Ausbaustufe oder ein Versorgungsgrad in Bezug auf Versorgungsstationen eines vorbestimmten Typs sichergestellt ist. Die Region kann ein Stadtteil oder eine Stadt oder ein Bundesland oder eine ganze Nation sein, um nur Beispiele zu nennen. Abmessungen der Region können in einem Bereich von einem Quadratkilometer bis zur Größe einer Nation oder eines Kontinents liegen. Beispielsweise kann vorgesehen sein, dass für ein Verkehrswegenetz 12 der Ausbauprozess in Bezug auf Versorgungsstationen 13 sichergestellt werden soll, die einen bestimmten Energieträger und/oder Betriebsstoff, beispielsweise einen Energieträger wie Wasserstoff oder ein Gas der beschriebenen Art oder Harnstofflösung betreffen. Die Ausbaustufe kann hierbei für die gesamte Region 11 einheitlich festgelegt werden oder beispielsweise getrennt nach Autobahn 14, Stadtgebieten 15 und ländlichen Regionen 16, um nur Beispiele zu nennen. Der Ausbau kann mittels Baueinheiten 17 erfolgen, die durch eine Prozessorschaltung 18 des Systems 10 derart angesteuert werden können, dass durch die Baueinheiten 17 der Ausbau erfolgen kann.

Die Prozessorschaltung 18 kann hierzu zunächst Kartendaten 19 einer Landkarte 19' betreffend die Region 11 sowie einen Datensatz 20 empfangen. Der Datensatz 20 kann angeben, wo in der Region 11 sich Basiseinrichtungen befinden, also bereits vorhandene Versorgungsinfrastruktur. Eine Basiseinrichtung 21 kann beispielsweise eine Institution oder eine Betriebsstätte sein, wo ein Energieträger oder allgemein ein Betriebsmittel angeboten wird, das eine Referenz zu dem neuen, bereitzustellenden Betriebsmittel darstellt. Beispielsweise kann für einen Energieträger wie Wasserstoff oder Gas als Betriebsmittel ein Referenzbetriebsmittel in Form von Benzin und/oder Diesel angesehen werden und entsprechend als Basiseinrichtung 21 jeweils eine Tankstelle in der Region 11 angesehen werden. Der Übersichtlichkeit halber sind in Fig. 1 in der Region 11 nur einige der Basiseinrichtungen 21 mit einem Bezugszeichen versehen. Auch eine bereits für das gewünschte Betriebsmittel, also beispielsweise Wasserstoff oder Gas, vorhandene Versorgungsstation 13 stellt eine Basiseinrichtung dar, die durch den Datensatz 20 beschrieben sein kann. Der Datensatz 20 kann beispielsweise eine jeweilige Geoposition jeder Basiseinrichtung 21 durch Geokoordinaten beschreiben.

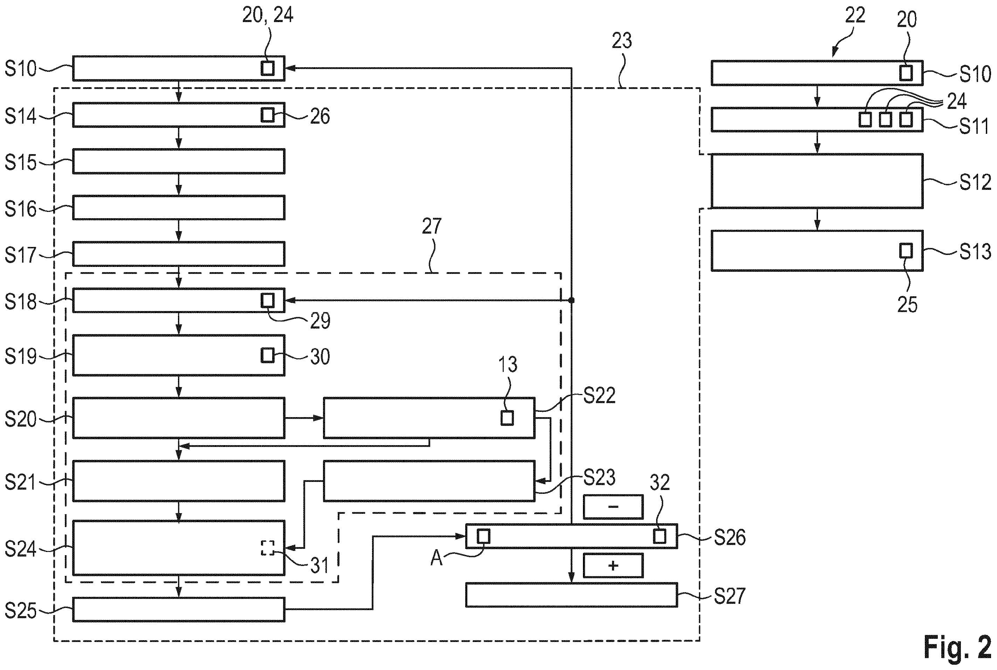

Ausgehend von der Landkarte 19', wie sie durch die Kartendaten 19 beschrieben sein kann, und dem empfangenen Datensatz 20 kann die Prozessorschaltung ein Verfahren durchführen, wie es in Fig. 2 veranschaulicht ist. Anschließend können eine oder mehrere Baueinheiten 17 zum Durchführen des Ausbauprozesses durch die Prozessorschaltung 18 angesteuert werden.

Dadurch können dann weitere Basiseinrichtungen 21 derart ausgebaut oder erweitert werden, dass sie zusätzliche Versorgungsstationen darstellen und somit die gewünschte Ausbaustufe an Versorgungsstationen 13 bereitgestellt oder realisiert wird.

Fig. 2 veranschaulicht, wie das Verfahren eine optionale äußere Verfahrensstufe 22 und eine innere Verfahrensstufe 23 aufweisen kann.

In der äußeren Verfahrensstufe 22 kann in einem Schritt S10 der volle, ursprüngliche Datensatz 20 empfangen werden. In einem Schritt S11 kann der Datensatz 20 aufgeteilt werden in Teildatensätze 24, von denen einer beispielsweise die Basiseinrichtungen 21 an der Autobahn 14, ein Teildatensatz 24 die Basiseinrichtungen 21 in Stadtgebieten 15 und ein Teildatensatz 24 die Basiseinrichtungen 21 in der ländlichen Region 16 beschreiben kann. Eine entsprechende Einteilung kann beispielsweise durch Tagging-Angaben erreicht werden, die in dem Datensatz 20 für die unterschiedlichen Basiseinrichtungen 21 enthalten sein können.

In einem Schritt S12 kann für jeden Teildatensatz 24 die Verfahrensstufe 23 ausgeführt werden. In einem Schritt S13 können dann für die einzelnen Teildatensätze 24 ermittelte Signalisierungen 25 zusammengefasst werden. Die Signalisierungen 25 können Signaldaten sein, welche angeben, welche Basiseinrichtung 21 in der Region 11 als Versorgungsstation 13 genutzt werden soll und/oder als Versorgungsstation 13 ausgebaut werden soll, indem entsprechende Komponenten zum Bereitstellen des Betriebsmittels, das die Versorgungsstation 13 jeweils bereitstellen soll, dort installiert oder aufgebaut werden.

In der Verfahrensstufe 23 kann jeweils ein Teildatensatz 24 zugrundegelegt werden oder, wenn die optionale Verfahrensstufe 22 nicht ausgeführt wird, der gesamte oder ursprüngliche Datensatz 20. In letzterem Fall kann dann der Schritt S10 unmittelbar als Einleitung zur Verfahrensstufe 23 durchgeführt werden.

In einem Schritt S14 kann eine Koordinatentransformation durchgeführt werden, um Geopositionsdaten 26 der Basiseinrichtungen 21 auf die Kartendaten 19 zu transformieren oder zu projizieren.

Wird die optionale Verfahrensstufe 22 nicht verwendet, so können alternativ dazu in Schritten S15, S16 und S17 die Tagging-Angaben der einzelnen Daten des Datensatzes ausgewertet werden und der Datensatz im Schritt S16 aufgeteilt werden. Optional kann dann mit den reduzierten Teildatensätzen in Schritt S17 fortgefahren werden. In einem jeweiligen Iterationsdurchlauf 27 kann in einem Schritt S18 eine Rasterweite festgelegt werden, in einem Schritt S19 das Raster 30 mit dieser Rasterweite 29 über der Region 11 in der Landkarte 19' aufgespannt werden und in einem Schritt S20 für die einzelnen Rasterzellen des Rasters 30 ermittelt werden, welche der Basiseinrichtungen 21 sich in der jeweiligen Rasterzelle befinden. Es kann dann pro Rasterzelle eine geeignete Basiseinrichtung im Schritt 21 ermittelt werden. Befindet sich in einer Rasterzelle bereits eine Versorgungsstation 13, so kann alternativ in einem Schritt S22 in dieser Rasterzelle diese bereits vorhandene Versorgungsstation 13 in einem Schritt S23 ausgewählt werden. Hierdurch ergeben sich in einem Schritt S24 pro Rasterzelle ausgewählte verbleibende Basiseinrichtungen 31, falls in der jeweiligen Rasterzelle zuvor dort bereits eine Basiseinrichtung vorhanden war.

In einem Schritt S25 kann überprüft werden, welcher Ausbauzustand sich ergibt, wenn bei der gegebenen Rasterweite die ausgewählten verbleibenden Basiseinrichtungen 31 zu Versorgungsstationen ausgebaut werden würden. Dies wird anhand eines Abbruchkriteriums A in einem Schritt S26 überprüft werden. Für den Fall, dass das Abbruchkriterium A nicht erfüllt ist (in Fig. 2 durch ein Minus-Zeichen symbolisiert), so kann der Iterationsdurchlauf 27 erneut mit einer vergrößerten Rasterweite 29 durchlaufen werden. Sollte ein neuer Wert für den zu erzielenden Versorgungszustand oder die zu erzielende Ausbaustufe 32 vorgegeben werden, so kann mit dem Schritt S14 fortgefahren werden auf Grundlage des ursprünglichen Datensatzes 20 oder des Teildatensatzes 24.

Ist das Abbruchkriterium A erfüllt (in Fig. 2 durch ein Plus-Zeichen symbolisiert), so ist die gewünschte Ausbaustufe 32 erreicht und der Ausbauprozess kann in einem Schritt S27 beendet werden.

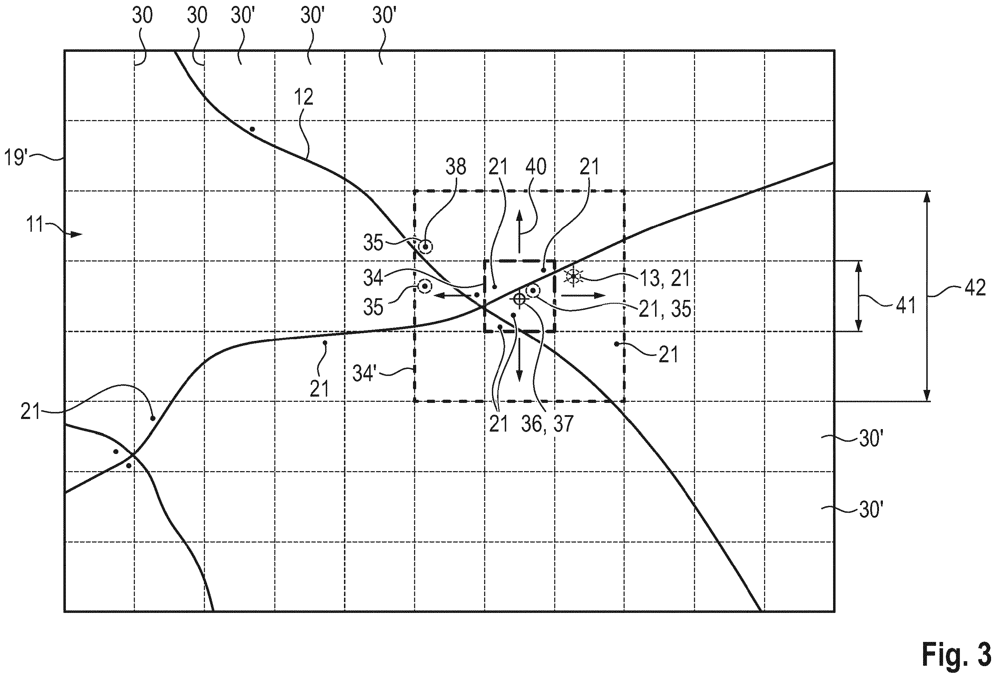

Fig. 3 veranschaulicht beispielsweise einen Iterationsdurchlauf 27. Dargestellt ist die Landkarte 19', wie sie durch die Kartendaten 19 beschrieben sein kann. Durch die Landkarte 19' ist die Region 11 dargestellt. Dargestellt ist ein Ausschnitt des Verkehrswegenetzes 12. In der Region 11 können Basiseinrichtungen 21 vorhanden sein, von denen der Übersichtlichkeit halber nur einige mit dem Bezugszeichen 21 versehen sind. Durch das aktuell verwendete Raster 30 kann die Region 11 in Rasterzellen 30' eingeteilt sein, von denen der Übersichtlichkeit halber nur einige mit einem Bezugszeichen versehen sind. Für jede Rasterzelle 30' können folgende Schritte durchgeführt werden, was in Fig. 3 beispielhaft für eine Rasterzelle 34 dargestellt ist. Die in der Rasterzelle 34 angeordneten oder befindlichen Basiseinrichtungen 31 können ermittelt werden und es kann aus den Basiseinrichtungen 21 eine ausgewählte verbleibende Basiseinrichtung 35 ausgewählt werden. Es kann sich bei der ausgewählten Basiseinrichtung 35 beispielsweise um diejenige handeln, die einem geometrischen Schwerpunkt 36 der in der Rasterzelle 34 befindlichen Basiseinrichtungen 21 am nächsten liegt. Eine solche Bedingung ergibt ein mögliches Auswahlkriterium 37. Befindet sich in einer Rasterzelle 30' nur eine einzige Basiseinrichtung 38, so wird natürlich diese ausgewählt. Befindet sich keine Basiseinrichtung in einer Rasterzelle 30', so ergibt sich auch keine ausgewählte Basiseinrichtung 35. Sind mehrere Basiseinrichtungen 21 in einer Rasterzelle enthalten und ist eine davon bereits eine Versorgungsstation 13, so kann natürlich gemäß dem Auswahlkriterium diese Basiseinrichtung 21 als ausgewählte Basiseinrichtung 35 verwendet werden.

In einem nächsten Schritt kann für den Fall, dass das Abbruchkriterium A noch nicht erfüllt ist In diesem Fall kann in einem nächsten Iterationsdurchlauf 27 eine Rastervergrößerung 40 durchgeführt werden, das heißt eine Rasterweite 41 der Rasterzelle 34 kann auf eine vergrößerte Rasterweite 42 vergrößert werden, indem beispielsweise Rasterzellen 30' zusammengefasst werden, sodass sich eine vergrößerte Rasterzelle 34' ergibt, wie dies in Fig. 3 veranschaulicht ist.

Für die vergrößerte Rasterzelle 34' kann nun der Iterationsdurchlauf 27 in der beschriebenen Weise durchgeführt werden, wobei nur die ausgewählten verbleibenden Basiseinrichtungen 35 jeder Rasterzelle 30' berücksichtigt werden.

Im Folgenden ist noch einmal eine besonders bevorzugte Ausführungsform beschrieben, wobei als Basiseinrichtungen hier "Tankstellen" beispielhaft zugrunde gelegt sind.

Dieses Verfahren stellt sicher, dass nicht wahllos die für die aufzubauende neue Infrastruktur gebauten Tankstellen ("neue" Tankstellen) genommen werden, auch wenn sie sinnlos platziert wurden, sondern gleichsam eine abgewogene Wahl getroffen wird.

Das vorgeschlagene Verfahren nutzt bestehende Infrastrukturen zur Ermittlung von neuen Infrastrukturen. Insbesondere bei Tankstelleninfrastrukturen zur Versorgung des Kunden mit flüssigen oder gasförmigen Kraftstoffen und/oder Betriebsstoffen kann davon ausgegangen werden, dass im voll ausgebauten Zustand diese eine ähnliche Versorgung wie das heutige Netz mit Benzin und/oder Dieselkraftstoff angestrebt wird. Dieses heutige Netz ist sowohl am Bedarf als auch an der Wirtschaftlichkeit ausgerichtet. Eine besondere Schwierigkeit der Ermittlung der Infrastruktur besteht in der Ermittlung des stufenweisen Aufbaus. Als Grundlage des Verfahrens zur Ermittlung neuer Tankstelleninfrastrukturen kann also die bestehende Infrastruktur an Benzin- und Dieseltankstellen herangezogen werden. Diese Tankstellen werden mit Geokoordinaten versehen. Dies ist nun der initiale Datensatz. Zur Bestimmung der einzelnen Ausbaustufen werden die folgenden Schritte solange durchlaufen, bis die gewünschte Anzahl an Ausbaustufen erreicht ist.

Es kann sein, dass es bereits Tankstellen der neuen Versorgungsinfrastruktur gibt ("neue" Tankstellen). Diese wären dann im Datensatz ebenfalls vorhanden. Bei der Auswahlmethodik wäre dann darauf zu achten, dass diese Tankstellen bevorzugt ausgewählt werden, wobei sich zwei Möglichkeiten ergeben:
a) die neue Tankstelle wird immer den "alten" Tankstellen vorgezogen,
b) die neue Tankstelle wird ebenfalls in eine Bewertung eingeschlossen, es kommt dann zu einer zusätzlichen Tankstelle als Auswahl aus den alten Tankstellen, wenn z.B. der mittlere quadratische Abstand der neu aus den alten Tankstellen ausgewählte Abstand zu den anderen Tankstellen um ein relatives Maß besser ist als die bereits vorhandene neue Tankstelle; ansonsten wird die bereits vorhandene neue Tankstelle ausgewählt.

Die in Fig. 2 veranschaulichten Verfahrensschritte ergeben sich dann wie folgt:
S10) Bereitstellen eines vollen, ursprünglichen Datensatzes 20.
S14) Koordinatentransformation zur Minderung von Verzerrungseffekten.
S15) Tagging-Angaben der einzelnen Datensätze ermitteln, z.B. nach geographischer Zugehörigkeit wie städtischer Bereich, ländlicher Bereich, Autobahn/Fernwege. Weitere Beispiele sind Einwohnerdichten, Postleitzahlen, Verkehrsdichten, Fahrzeugdichten. Entfällt, falls in vorhergehenden Schritten schon ein Tagging vorgenommen wurde.
S16) Aufteilen des Datensatzes anhand des vorgenommen Taggings oder nur Verwendung bestimmter Daten, die vorzugsweise nur einem Tag zugehören. Entfällt, wenn bereits eine Aufteilung vorliegt.
S17) Option: Bildung reduzierter Datensätze, die jeweils einem oder mehreren Tags zugehören. S18) Festlegung der Rasterweite, wobei im ersten Schritt die Rasterweite möglichst klein gewählt wird (0,1 bis 2 km, vorzugsweise 0,5 bis 1 km). Die Rasterweite beschreibt dabei vorzugsweise ein Quadrat und bezieht sich nach Möglichkeit auf die Mitte des in S19) aufzuziehenden Gesamtrasters, um die relativen Verzerrungseffekte, insbesondere in Nord-Süd-Ausdehnung, gering zu halten. Bei einem erneuten Durchlaufen von f) ist die Rasterweite größer als im vorherigen Schritt zu wählen. Vorzugsweise wird sie um den Faktor 1,5 bis 5, noch mehr bevorzugt um den Faktor 2 bis 3 erhöht.
S19) Aufspannen des Rasters anhand der Extrempunkte der Koordinaten in West-Ost- und Nord-Süd-Ausrichtung sowie der in S18 festgelegten Rasterweite. Dabei werden immer volle Raster gewählt, so dass ein Überschreiten der Extrempunkte an den Enden der Ost-West- und der Nord-Süd-Ausrichtung durch das übergelegte Raster auftritt. (Gesamtraster mit einzelnen Rasterzellen).
S20) Ermittlung der Tankstellen, die in den jeweiligen Rasterzellen liegen.
S21) Auswahl der geeigneten Tankstellen in den einzelnen Rasterzellen. Dies kann z.B. die Tankstelle sein, die die geringsten quadratischen Abstände zu allen anderen Tankstellen hat, oder die dem Schwerpunkt der Tankstellen im Raster am nächsten liegt.
S24) Bildung eines neuen Datensatzes aus den jeweils ausgewählten Tankstellen der einzelnen Raster, entweder in Form eines neues, separaten Datensatzes, der weiter verwandt wird, oder durch die Kennzeichnung der einzelnen Daten innerhalb des vollen Datensatzes (nach/vor Transformation).
S25) Bewertung des Ausbauzustands durch z.B. die Ermittlung der durchschnittlichen Fahrentfernungen zwischen den in S18 bis S21 ermittelten Tankstellen.
S26) Bei ausreichendem Ausbauzustand: Abbruch (S27), bei nicht ausreichendem Ausbauzustand: erneutes Durchlaufen der Schritte S18 bis S25, wahlweise auch S10) bis S17).

S13) Bei der Verwendung von Tags bei den Datensätzen kann nach Durchlaufen aller Teildatensätze mit veränderten Rasterweiten ein Gesamtausbauplan in Stufen zusammengesetzt werden.

Vorteilhaft kann die Möglichkeit genutzt werden, dass nur ein Datensatz mit geringem Zusatzaufwand und mit schneller Prozessierung mit einem robusten Algorithmus verarbeitet werden braucht.

Mögliche Ausführungsformen ergeben sich wie folgt:
a) Auf ein Tagging der Daten sowie die Aufteilung des Datensatzes kann verzichtet werden, der Ablauf bleibt ansonsten gleich.
b) Die Anwendung auf Infrastrukturen, die eine geographische Verteilungsgrundlage haben, als Datenbasis (Datensatz 20), ist möglich. Beispiele hierfür sind Supermärkte, Apotheken, Baumärkte.

Erstmals wird somit ein Verfahren zur einfachen, schnellen und robusten Ermittlung der Ausbaustufen sowie der genauen Lokalisierung von neuartigen Infrastrukturen verfügbar. Der Aufbau jeglicher Infrastrukturen für neue Güter, die ein persönliches Erscheinen erfordern und für die es Standortprobleme gibt (Supermärkte, Apotheken, Postfilialen, Mobilfunkshops, Baumärkte), ist nun steuerbar.

Insgesamt zeigt das Beispiel, wie eine Methodik zur Strategieentwicklung und/oder Beurteilung des Ausbaus einer Tankstelleninfrastruktur bereitgestellt werden kann.

### Bezugszeichenliste

- 10: System
- 11: Region
- 12: Verkehrswegenetz
- 13: Versorgungsstation
- 14: Autobahn
- 15: Stadtgebieten
- 16: Region
- 17: Baueinheiten
- 18: Prozessorschaltung
- 19: Kartendaten
- 19': Landkarte
- 20: Datensatz
- 21: Basiseinrichtung
- 22: Verfahrensstufe
- 23: Verfahrensstufe
- 24: Teildatensatz
- 25: Signalisierungen
- 26: Geopositionsdaten
- 27: Iterationsdurchlauf
- 29: Rasterweite
- 30: Raster
- 30': Rasterzelle
- 31: Basiseinrichtungen
- 32: Ausbaustufe
- 34: Rasterzelle
- 35: Basiseinrichtung
- 36: Schwerpunkt
- 37: Auswahlkriterium
- 38: Basiseinrichtung
- 40: Rastervergrößerung
- 41: Rasterweite
- 42: Rasterweite
- A: Abbruchkriterium

## Patentansprüche

1. Versorgungsverfahren, durch welches ein Betriebsmittel für Kraftfahrzeuge innerhalb einer vorbestimmten geographischen Region (11) über Versorgungsstationen (13) einer Versorgungsinfrastruktur an Standorten ausgegeben wird, die durch ein Verfahren zum Steuern eines Ausbauprozesses der Versorgungsstationen (13) in der geographischen Region (11) ermittelt werden, in welcher sich Basiseinrichtungen (21) befinden, von denen einige als jeweilige Basis für den Ausbau zu einer neuen Versorgungsstation (13) verwendet werden sollen und/oder von denen zumindest eine bereits als Versorgungsstation (13) ausgebaut ist, wobei
durch eine Prozessorschaltung (18) in einer digitalen Landkarte (19') der Region (11) mittels eines vorbestimmen Rasters (30) mit einer initialen Rasterweite (41) die Region (11) in Rasterzellen (30') eingeteilt wird,
**dadurch gekennzeichnet, dass**
durch die Prozessorschaltung (18) in einem jeweiligen Iterationsdurchlauf (27) für jede Rasterzelle (30'):
- ermittelt wird, welche der Basiseinrichtungen (21) sich in dieser Rasterzelle (30') befindet, und
- bei Vorhandensein zumindest einer Basiseinrichtung (21) in der Rasterzelle (30') mittels eines vorbestimmten Auswahlkriteriums zumindest eine vorhandene Basiseinrichtung (21) als ausgewählte verbleibende Basiseinrichtung (35) ausgewählt und jede übrige Basiseinrichtung (21) der Rasterzelle (30') für das weitere Verfahren ignoriert wird, und
falls durch die Rasterweite (41) des aktuellen Rasters (30) und/oder die ausgewählten verbleibenden Basiseinrichtungen (35) ein vorbestimmtes Abbruchkriterium (A) noch unerfüllt ist, die Region (11) erneut mittels eines weiteren Rasters (30) mit einer vergrößerten Rasterweite (42), die größer als die zuvor verwendete Rasterweite (41) ist, in vergrößerte Rasterzellen (34') eingeteilt und für die vergrößerten Rasterzellen (34') des neuen Rasters (30) der Iterationsdurchlauf (27) wiederholt wird, und
andernfalls für die in den Rasterzellen (30') ausgewählten verbleibenden Basiseinrichtungen (35) signalisiert wird, dass diese als Basen für die Versorgungsstationen (13) zu verwenden sind, wobei
bei erfülltem Abbruchkriterium (A) dann gemäß der Signalisierung an den ausgewählten verbleibenden Basiseinrichtungen (35), an denen eine Versorgungsstation (13) noch fehlt, jeweils ein Installationsvorgang zum Installieren jeweils einer Versorgungsstation (13) ausgelöst oder gesteuert wird und damit
die Basen in Versorgungstationen innerhalb der Region umgewandelt werden und sich dadurch ein Aufbau der Versorgungsinfrastruktur ergibt, die in der gesamten Region einen vorgegebenen Versorgungsgrad oder eine vorgegebene Ausbaustufe in Bezug auf das Verteilen der jeweils vorgesehenen Betriebsmittel ergibt, und durch den Betrieb der Versorgungsinfrastruktur das Betriebsmittel innerhalb der Region an den Standorten ausgegeben oder bereitgestellt wird und somit die Region mit dem Betriebsmittel für Kraftfahrzeuge auf dem Versorgungsgrad oder der Ausbaustufe versorgt wird und dies für die gesamte Region sichergestellt ist.

2. Versorgungsverfahren nach Anspruch 1, wobei das Abbruchkriterium (A) umfasst, dass die Rasterweite (42) des aktuellen Rasters einer vorbestimmten Zielrasterweite entspricht, welche einer durch den Ausbauprozess zu erreichenden vorgegebenen Ausbaustufe entspricht, und/oder dass
ein mittlerer und/oder ein maximaler Abstandswert eines jeweiligen Abstands zwischen den ausgewählten verbleibenden Basiseinrichtungen (35) in einem jeweils vorbestimmten Werteintervall liegt.

3. Versorgungsverfahren nach einem der vorhergehenden Ansprüche, wobei das Auswahlkriterium zum Auswählen der jeweiligen Basiseinrichtung (21) vorsieht, dass zu allen in der jeweiligen Rasterzelle (30') vorhandenen Basiseinrichtungen (21) eine geometrische Optimierungsbedingung (37) geprüft und diejenige Basiseinrichtung (21), welche die Optimierungsbedingung erfüllt, ausgewählt wird.

4. Versorgungsverfahren nach Anspruch 3, wobei die geometrische Optimierungsbedingung (37) umfasst, dass die einem geometrischen Schwerpunkt (36) nächstgelegene Basiseinrichtung (21) ausgewählt wird oder dass diejenige Basiseinrichtung (21), deren quadratischer Abstandswert zu allen übrigen Basiseinrichtungen (21) der Rasterzelle (30') am geringsten ist, ausgewählt wird.

5. Versorgungsverfahren nach einem der vorhergehenden Ansprüche, wobei das Auswahlkriterium zum Auswählen der jeweiligen Basiseinrichtung (21) vorsieht, dass eine oder einige oder jede Basiseinrichtung (21) ausgewählt wird, die bereits als Versorgungsstation (13) ausgebaut ist.

6. Versorgungsverfahren nach einem der vorhergehenden Ansprüche, wobei das Auswahlkriterium zum Auswählen der jeweiligen Basiseinrichtung (21) vorsieht, dass zu allen in der jeweiligen Rasterzelle (30') vorhandenen Basiseinrichtungen (21) eine jeweilige Eigenschaftsbewertung zu einer vorbestimmten Versorgungseigenschaft ermittelt wird und diejenige Basiseinrichtung (21) mit einer größten Gesamtbewertung ausgewählt wird.

7. Versorgungsverfahren nach Anspruch 6, wobei zumindest eine der folgenden Versorgungseigenschaften berücksichtigt wird: eine verfügbare Infrastruktur, eine verfügbare Baufläche, eine vorhandene Verkehrsanbindung.

8. Versorgungsverfahren nach einem der vorhergehenden Ansprüche, wobei ein Gesamtdatensatz an Basiseinrichtungen (21) ermittelt wird und jeder der Basiseinrichtungen (21) durch eine jeweilige Tagging-Angabe einer vorbestimmten Versorgungskategorie beschrieben wird und der Gesamtdatensatz der Basiseinrichtungen (21) in Teildatensätze (24) eingeteilt wird, wobei jeder Teildatensatz (24) die Basiseinrichtungen (21) derselben Tagging-Angabe enthält, und für jeden Teildatensatz (24) getrennt mittels der Iterationsdurchläufe (27) Basen für Versorgungsstationen (13) ermittelt werden.

9. Versorgungsverfahren nach Anspruch 8, wobei durch die Tagging-Angaben zumindest eine der folgenden Versorgungskategorien beschrieben ist: eine lokale Einwohnerdichte an der jeweiligen Basiseinrichtung (21), eine Postleitzahl der Basiseinrichtung (21), eine lokale Verkehrsdichte an der jeweiligen Basiseinrichtung (21), eine lokale Fahrzeugdichte an der jeweiligen Basiseinrichtung (21), ein Betriebsort der Basiseinrichtung (21).

10. Versorgungsverfahren nach einem der vorhergehenden Ansprüche, wobei der Ausbauprozess Versorgungsstationen (13) für eines vorbestimmten Betriebsmittels für Kraftfahrzeuge betrifft und als Basiseinrichtungen (21) Tankstellen zugrunde gelegt werden.

11. Versorgungsinfrastruktur, die dazu eingerichtet ist, eine vorbestimmte geographische Region (11) mit vorbestimmten Gütern zu versorgen, wobei die Versorgungsinfrastruktur hierzu Versorgungsstationen (13) aufweist, deren Standorte in der Region (11) durch ein Versorgungsverfahren nach einem der Ansprüche 1 bis 10festgelegt sind.

## Claims

1. Supply method, by which an operating resource for motor vehicles is dispensed within a predetermined geographical region (11) via supply stations (13) of a supply infrastructure, at locations determined by a method for controlling a development process for developing the supply stations (13) in the geographical region (11) in which base facilities (21) are located, some of which are to be used as respective bases for developing into new supply stations (13) and/or at least one of which has already been developed as a supply station (13),
a processor circuit (18) dividing the region (11) into grid cells (30') in a digital map (19') of the region (11) by means of a predetermined grid (30) with an initial grid spacing (41),
**characterized in that**
in respective iteration passes (27), the processor circuit (18) carries out the following for each grid cell (30'):
- determining which of the base facilities (21) is located in this grid cell (30'), and
- if at least one base facility (21) is present in the grid cell (30'), at least one present base facility (21) is selected as the selected remaining base facility (35) by means of a predetermined selection criterion, and all other base facilities (21) in the grid cell (30') are ignored for the remainder of the method, and
in the case that the grid spacing (41) of the current grid (30) and/or the selected remaining base facilities (35) do not yet meet a predetermined termination criterion (A), the region (11) is again divided into enlarged grid cells (34') by means of a further grid (30) with an enlarged grid spacing (42) that is larger than the previously used grid spacing (41), and the iteration pass (27) is repeated for the enlarged grid cells (34') of the new grid (30), and
otherwise, for the remaining base facilities (35) selected in the grid cells (30'), it is indicated that they are to be used as bases for the supply stations (13),
an installation procedure for installing a supply station (13) respectively then being triggered or controlled according to the indication, if the termination criterion (A) is met, at each selected remaining base facility (35) still without a supply station (13), and thus
the bases being converted into supply stations within the region and the supply infrastructure being constructed as a result, said supply infrastructure resulting in a predefined level of supply or a predefined level of development throughout the entire region with respect to the distribution of the operating resources provided in each case, and the operating resource being dispensed or made available at the locations within the region as a result of the supply infrastructure being operated, thus supplying the region with the operating resource for motor vehicles at the level of supply or level of development, and this being ensured for the entire region.

2. Supply method according to claim 1, wherein the termination criterion (A) comprises the grid spacing (42) of the current grid corresponding to a predetermined target grid spacing that corresponds to a predefined level of development to be achieved by the development process, and/or
an average and/or a maximum distance value of a distance between the selected remaining base facilities (35) lying in a respectively predetermined value interval in each case.

3. Supply method according to either of the preceding claims, wherein the selection criterion for selecting the relevant base facility (21) provides for a geometric optimization condition (37) to be checked for all base facilities (21) present in the relevant grid cell (30'), and for the base facility (21) that fulfills the optimization condition to be selected.

4. Supply method according to claim 3, wherein the geometric optimization condition (37) comprises selecting the base facility (21) closest to a geometric centroid (36) or selecting the base facility (21) with the smallest square distance value to all other base facilities (21) in the grid cell (30').

5. Supply method according to any of the preceding claims, wherein the selection criterion for selecting the relevant base facility (21) provides for one or some or each base facility (21) that has already been developed as a supply station (13) to be selected.

6. Supply method according to any of the preceding claims, wherein the selection criterion for selecting the relevant base facility (21) provides for a relevant characteristic rating for a predetermined supply characteristic to be determined for all base facilities (21) present in the relevant grid cell (30'), and for the base facility (21) with the highest overall rating to be selected.

7. Supply method according to claim 6, wherein at least one of the following supply characteristics is taken into account: an available infrastructure, an available building area, an existing transport connection.

8. Supply method according to any of the preceding claims, wherein an overall data set of base facilities (21) is determined and each of the base facilities (21) is described by a relevant tagging specification of a predetermined supply category and the overall data set of the base facilities (21) is divided into sub-data sets (24), wherein each sub-data set (24) contains the base facilities (21) of the same tagging specification, and for each sub-data set (24) bases for supply stations (13) are determined separately by means of the iteration passes (27).

9. Supply method according to claim 8, wherein the tagging specifications describe at least one of the following supply categories: a local population density at the relevant base facility (21), a postal code of the base facility (21), a local traffic density at the relevant base facility (21), a local vehicle density at the relevant base facility (21), an operating location of the base facility (21).

10. Supply method according to any of the preceding claims, wherein the development process relates to supply stations (13) for a predetermined operating resource for motor vehicles, and filling stations are used as the basis for base facilities (21).

11. Supply infrastructure designed to supply a predetermined geographical region (11) with predetermined goods, wherein the supply infrastructure has supply stations (13) for this purpose, of which the locations in the region (11) are established by a supply method according to any of claims 1 to 10.

## Revendications

1. Procédé d'approvisionnement par lequel un moyen d'exploitation pour des véhicules automobiles à l'intérieur d'une région géographique (11) prédéterminée est délivré par l'intermédiaire de stations d'approvisionnement (13) d'une infrastructure d'approvisionnement à des emplacements qui sont établis par un procédé de commande d'un processus d'extension des stations d'approvisionnement (13) dans la région géographique (11) dans laquelle se trouvent des installations de base (21) dont certaines doivent être utilisées comme base respective pour l'extension en une nouvelle station d'approvisionnement (13) et/ou dont au moins l'une est déjà étendue comme station d'approvisionnement (13), dans lequel
la région (11) est divisée en cellules de trame (30') par un circuit de processeur (18) dans une carte géographique numérique (19') de la région (11) par le biais d'une trame (30) prédéterminée avec une largeur de trame initiale (41),
**caractérisé en ce que**
par le circuit de processeur (18) dans un passage d'itération (27) respectif pour chaque cellule de trame (30') :
- on établit lequel des dispositifs de base (21) se trouve dans cette cellule de trame (30'), et
- en présence d'au moins un dispositif de base (21) dans la cellule de trame (30'), au moins un dispositif de base (21) présent est sélectionné comme dispositif de base (35) restant sélectionné par le biais d'un critère de sélection prédéterminé et tout dispositif de base (21) restant de la cellule de trame (30') est ignoré pour la suite du procédé, et
si un critère d'interruption (A) prédéterminé n'est pas encore rempli par la largeur de trame (41) de la trame (30) actuelle et/ou les dispositifs de base (35) restants sélectionnés, la région (11) est à nouveau divisée en cellules de trame (34') agrandies par le biais d'une autre trame (30) avec une largeur de trame (42) agrandie qui est plus grande que la largeur de trame (41) utilisée auparavant, et le passage d'itération (27) est répété pour les cellules de trame (34') agrandies de la nouvelle trame (30), et
sinon, pour les dispositifs de base (35) restants sélectionnés dans les cellules de trame (30'), il est signalé que ceux-ci doivent être utilisés comme bases pour les stations d'approvisionnement (13), dans lequel
lorsque le critère d'interruption (A) est rempli, on déclenche ou on commande alors, conformément à la signalisation, sur les dispositifs de base (35) restants sélectionnés, sur lesquels il manque encore une station d'approvisionnement (13), respectivement un processus d'installation pour installer respectivement une station d'approvisionnement (13) et ainsi
les bases sont transformées en stations d'approvisionnement à l'intérieur de la région et il en résulte une mise en place de l'infrastructure d'approvisionnement qui donne dans toute la région un degré d'approvisionnement donné au préalable ou un niveau d'extension donné au préalable en ce qui concerne la distribution des moyens d'exploitation respectivement prévus, et par l'exploitation de l'infrastructure d'approvisionnement, le moyen d'exploitation est distribué ou mis à disposition à l'intérieur de la région aux emplacements et ainsi la région est approvisionnée avec le moyen d'exploitation pour véhicules automobiles au degré d'approvisionnement ou au niveau d'extension et cela est assuré pour toute la région.

2. Procédé d'approvisionnement selon la revendication 1, dans lequel le critère d'interruption (A) comprend le fait que la largeur de trame (42) de la trame actuelle correspond à une largeur de trame cible prédéterminée, qui correspond à un niveau d'extension donné au préalable à atteindre par le processus d'extension, et/ou que
une valeur de distance moyenne et/ou une valeur de distance maximale d'une distance respective entre les dispositifs de base (35) restants sélectionnés se situe dans un intervalle de valeurs prédéterminé respectif.

3. Procédé d'approvisionnement selon l'une des revendications précédentes, dans lequel le critère de sélection pour sélectionner le dispositif de base (21) respectif prévoit de vérifier une condition d'optimisation géométrique (37) pour tous les dispositifs de base (21) présents dans la cellule de trame (30') respective, et de sélectionner le dispositif de base (21) qui remplit la condition d'optimisation.

4. Procédé d'approvisionnement selon la revendication 3, dans lequel la condition d'optimisation géométrique (37) comprend la sélection du dispositif de base (21) le plus proche d'un centre de gravité géométrique (36) ou la sélection du dispositif de base (21) dont la valeur de distance quadratique à tous les autres dispositifs de base (21) de la cellule de trame (30') est la plus faible.

5. Procédé d'approvisionnement selon l'une des revendications précédentes, dans lequel le critère de sélection pour sélectionner le dispositif de base (21) respectif prévoit de sélectionner un ou certains ou chaque dispositif de base (21) qui est déjà étendu en tant que station d'approvisionnement (13).

6. Procédé d'approvisionnement selon l'une des revendications précédentes, dans lequel le critère de sélection pour sélectionner le dispositif de base (21) respectif prévoit que, pour tous les dispositifs de base (21) présents dans la cellule de trame (30') respective, une évaluation de propriété respective est établie pour une propriété d'approvisionnement prédéterminée et le dispositif de base (21) ayant une évaluation globale la plus grande est sélectionné.

7. Procédé d'approvisionnement selon la revendication 6, dans lequel au moins l'une des propriétés d'approvisionnement suivantes est prise en compte : une infrastructure disponible, une surface de construction disponible, une desserte de transport existante.

8. Procédé d'approvisionnement selon l'une des revendications précédentes, dans lequel un ensemble de données global de dispositifs de base (21) est établi et chacun des dispositifs de base (21) est décrit par une indication d'étiquetage respective d'une catégorie d'approvisionnement prédéterminée et l'ensemble de données global des dispositifs de base (21) est divisé en ensembles de données partiels (24), dans lequel chaque ensemble de données partiel (24) contient les dispositifs de base (21) de la même indication d'étiquetage, et des bases pour des stations d'approvisionnement (13) sont établies séparément pour chaque ensemble de données partiel (24) par le biais des passages d'itération (27).

9. Procédé d'approvisionnement selon la revendication 8, dans lequel au moins l'une des catégories d'approvisionnement suivantes est décrite par les indications d'étiquetage : une densité locale de population au niveau du dispositif de base (21) respectif, un code postal du dispositif de base (21), une densité locale de trafic au niveau du dispositif de base (21) respectif, une densité locale de véhicules au niveau du dispositif de base (21) respectif, un lieu d'exploitation du dispositif de base (21).

10. Procédé d'approvisionnement selon l'une des revendications précédentes, dans lequel le processus d'extension concerne des stations d'approvisionnement (13) pour un moyen d'exploitation prédéterminé pour des véhicules automobiles et des stations-service sont utilisées comme dispositifs de base (21).

11. Infrastructure d'approvisionnement, qui est agencée pour approvisionner une région géographique (11) prédéterminée avec des marchandises prédéterminées, dans laquelle l'infrastructure d'approvisionnement présente à cet effet des stations d'approvisionnement (13) dont les emplacements dans la région (11) sont fixés par un procédé d'approvisionnement selon l'une des revendications 1 à 10.
